# EUROPEAN PATENT SPECIFICATION

(11) **EP 1 100 088 B1**
(45) Date of publication and mention of the grant of the patent: **20.04.2005**
(21) Application number: 00309796.1
(22) Date of filing: 06.11.2000
(51) Int. Cl.: G11B 33/04

(54) **DVD case**
Behälter für DVD
Boitier de DVD

(30) Priority: 08.11.1999 GB 9926454
(43) Date of publication of application: 16.05.2001
(73) Proprietor: Pankhurst Design & Developments Limited, London W6 7HJ (GB)
(72) Inventor: Hill, Peter, London W6 (GB); Hayes-Pankhurst, Richard Paul, London SW6 6LP (GB)
(74) Representative: Knott, Stephen Gilbert

(56) References cited:
- EP-A- 0 671 743
- WO-A-99/30323
- US-A- 5 533 615
- US-A- 5 690 218

## Description

The invention relates to holders and more particularly to holders for discs having a central aperture, such as compact discs (CDS) or DV discs (DVDs).

A typical holder for a disc having a central aperture includes a mounting member which extends through the disc aperture to mount the disc on the mounting member. There exist a large number of proposals for releasing the disc from the mounting member and it has been customary to do this by forming the mounting member in two or more parts which are movable relative to one another to release the disc. For example, the mounting member parts can be moved relatively by pressing with a finger. Some examples of arrangements of this kind are shown in US-A-5788068, US-A-4793479, EP-A-671048 and US-A-5400902. It is a disadvantage of such arrangements that it is necessary to operate the central mounting to release the disc either at the same time as, or before, the disc is lifted away from the holder. This means that either two hands must be used or that two successive operations are necessary. This can be inconvenient and/or time-consuming.

EP-A-0671743 discloses a holder wherein a release mechanism remote from the mounting member is operable to release the disc to allow the disc to be removed from the mounting member.

According to the invention, there is provided a holder for a disc having a central aperture, the holder comprising a mounting member which extends through the disc aperture to mount the disc on the mounting member, and a release mechanism acting on the mounting member and operable at a position remote from the mounting member to cause the mounting member to release the disc from the mounting member.

By moving the release mechanism away from the mounting member, it is no longer necessary to work directly on the mounting member to release the disc. This can be easier and less time-consuming.

Preferably, the release mechanism is operable from a position adjacent a periphery of the disc, the release mechanism being operable by manually gripping the disc on the periphery of the disc and the release mechanism at spaced points generally across the diameter of the disc.

In this way, the disc can be released at the same time as it is pulled away from the holder.

The following is a more detailed description of an embodiment of the invention, by way of example, reference being made to the accompanying drawings in which:-
Figure 1 is a perspective view of a holder with a disc removed, the holder having two hinged leaves that fold over to make a closed casing, one leaf carrying a mounting member for mounting a disc and a release mechanism for releasing a disc from the mounting member,
Figure 2 is a section through the leaf carrying the mounting member, and the mounting member, of Figure 1, showing a disc carried by the mounting member, the release mechanism being in a rest position,
Figure 3 is a similar view to Figure 2 but showing the release mechanism in a first stage of operation to release a disc from the mounting member, and
Figure 4 is a similar view to Figures 1 and 2 but showing the disc released from the mounting member.

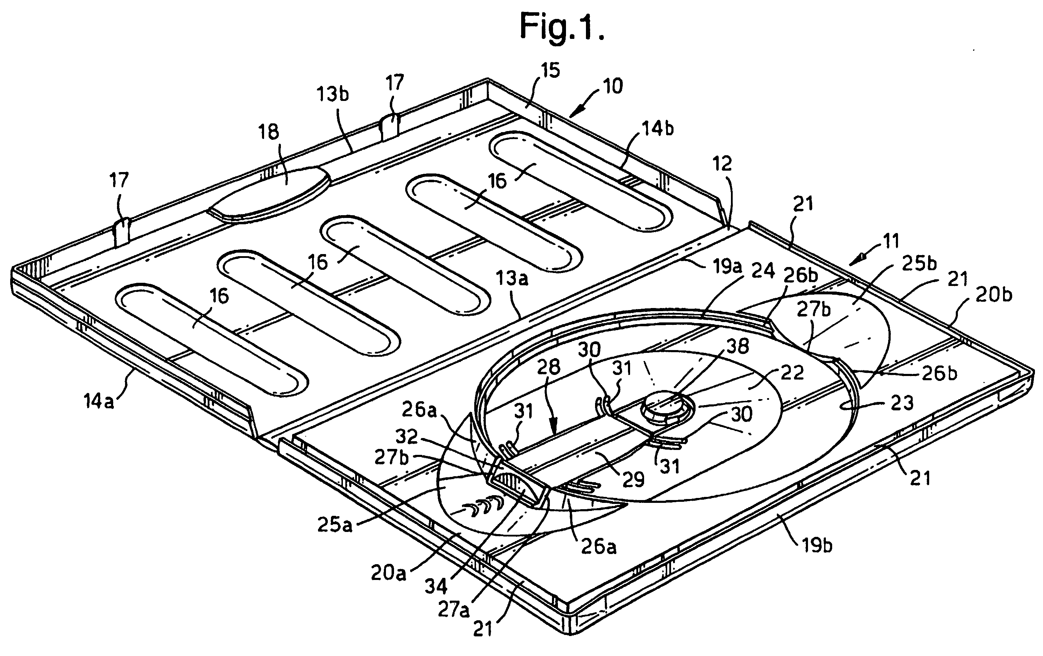

Referring first to Figure 1, the holder comprises a first leaf 10 connected to a second leaf 11 by a hinge 12. The first leaf 10, the second leaf 11 and the hinge 12 are all moulded in one piece from a suitable plastics material. The first leaf 10 is generally rectangular with two longer sides 13a,13b and two shorter sides 14a,14b. One longer side 13a is connected to the hinge. A wall 15 extends along the shorter sides 14a,14b and along the other longer side 13b. The portion of the wall 15 extending along the longer side 13b is provided with a pair of spaced catches 17. The first leaf 10 is provided with six moulded strengthening depressions 16 and a moulded catch 18 for receiving and holding printed matter such as a card or leaflet relating to the contents of the disc.

The second leaf 11 has longer sides 19a,19b and shorter sides 20a, 10b. One longer side 19a is connected to the hinge 12. A channel 21 is formed along the shorter sides 20a,20b and the other longer side 19b and receives and engages the wall 15 when the first leaf 10 is folded over on to the second leaf 11 about the hinge 12. In this disposition, the two leaves 10,11 form a closed casing. This casing can be opened by gripping the wall 15 and the channel 21 and separating the leaves 10,11.

The second leaf 11 has a generally flat surface provided with a central annular depression 22. The depression 22 is connected to the surface by an annular wall 23 provided with a step 24. The surface is formed with two part oval recesses 25a,25b each extending from an associated shorter wall 24a,24b to intersect with the depression 22. At the depression 22, the depth of each recess 25a,25b is substantially the same as the depth of the depression 22. In this region, the wall 23 has upstanding portions 26a,26b which are interrupted by diametrically opposed gaps 27a,27b. The second leaf 11 carries a release mechanism indicated generally at 28 and moulded integrally with the remainder of the holder. The release mechanism 28 comprises a flat generally rectangular release arm 29 extending radially relative to the centre of the depression 22. The release arm 29 sits in a correspondingly shaped hole in the depression 22 and is connected to the depression by four spring links 30. Each link 30 lies generally in the plane of the release arm 29 and extends away from a corresponding corner of the release arm 29 along an associated channel 31 in the depression, before connecting to the depression 22 at the end of the associated channel 31. In this way, the release arm 29 is spring-mounted relative to the depression 22 and biased by the links 30 into the rest position shown in Figure 1.

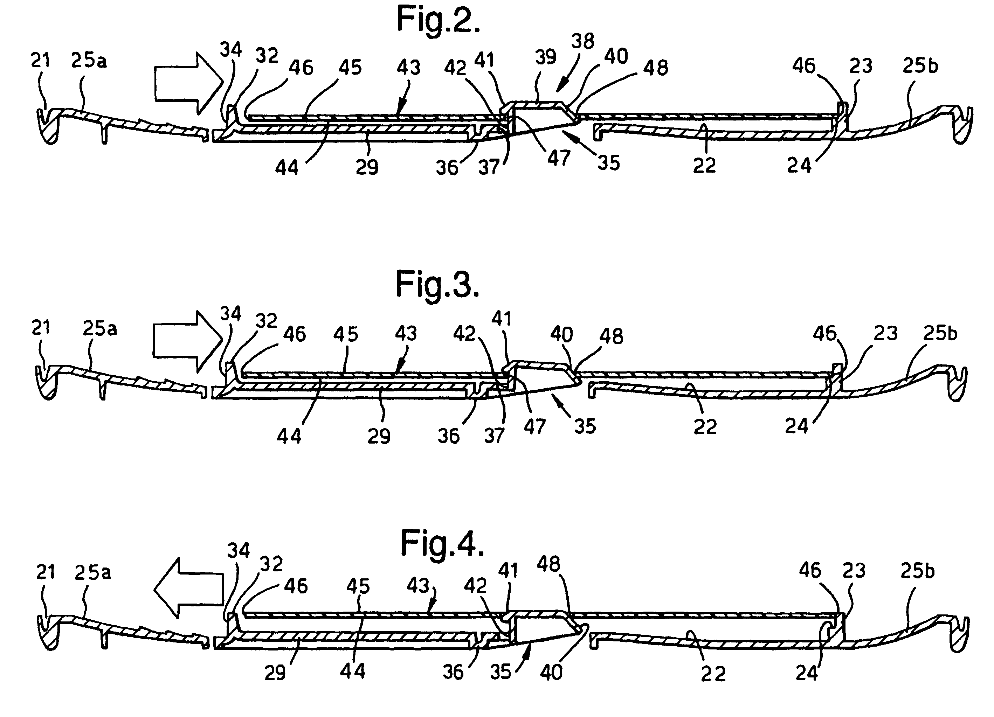

Referring next to Figure 2, the release arm 29 is formed at a first end with a finger engaging portion 32 which lies in one of the gaps 27a in the upstanding portion 26a of the wall 23. This portion 32 includes a gripping zone 34 in the shape of a segment of a circle (see Figure 1). The release arm 29 has a second end 35 and a U-section hinge 36 (see Figure 2) is provided towards the second end 35. As seen in that Figure, the hinge 36 extends in a direction normal to the length of the release arm 29. The U-section hinge 36 is of substantially thinner cross-section than the adjacent portions of the arm 29 to ensure that bending of the arm 29 takes place about the hinge 36. The second end 35 carries a mounting member 38 positioned so that it is concentric with the centre of the depression 22.

The mounting member 38 has a circular top 39 lying in a plane generally parallel to the plane of the release arm 29. The top 39 is surrounded by a wall which, for part of the circumferential extent of the wall, is of constant part circular cross-section along its axial length and which, for the remainder of the circumference of the mounting member 30 is part frusto-conical. The end of the mounting member 38 remote from the release arm 29 (i.e. adjacent the top 40) carries a projection 41 which extends radially from the mounting member 38 and overlies the centre of the circular wall portion 42. As seen in Figure 1, the projection 41 faces the finger portion 32. The centre of the frusto-conical portion 40 is thus diametrically opposite the projection 41.

The housing is designed for use with a CD or a DVD such as the disc 43 shown in Figure 1. The disc 43 is formed from a flexible plastics material and has a first side 44, a second side 45, a periphery 46 and a central aperture 47 with an edge 48 extending around the aperture. Other characteristics of such discs are well known and will not be described in detail.

The depression 22 in the second leaf 11 is sized so that the disc 43 can be received in the depression 22. In addition, the top end of the mounting member 38 (i.e. the end of the mounting member 38 remote from the depression 22) has a cross-section which is sufficiently small that it will pass through the aperture 47 although not necessarily when the mounting member 38 is orientated as shown in Figure 1. The disc 43 is mounted on the mounting member by placing the disc 43 so that the top end of the mounting member 30 is aligned with the aperture 47 and the projection 41 rests on the second side 45 of the disc 43. The disc 43 is then pushed downwardly. This causes the mounting member 38 to tilt about the hinge 36 and so change its orientation relative to the disc 43. Additionally, pushing down the disc 43 causes the arm 29 to move laterally against the action of the springs 30. This allows the projection 41 to pass through the aperture 47 and the edge 48 of the aperture 47 to pass beneath the projection 41 until it engages or is close to the circular wall portion 42 with the projection 41 overlying the second side 45 of the disc 43. The mounting member 38 then tilts back to its starting position under the action of the hinge 36 and if it has moved, the arm 29 returns to its rest position under the action of the springs 30. In this disposition, which is seen in Figure 1, the disc 43 is mounted on the mounting member 38 and held against release because release requires relative movement between the mounting member 38 and the disc 43 and the disc 43 is constrained against movement by the proximity of the step 24. The first leaf 10 can then be folded over the second leaf 11 and the parts snapped together to form the closed casing and, in this disposition, the disc 43 can be stored, transported and sold.

Referring next to Figures 3 and 4, the disc 43 is released from the mounting member 30, and thus removed from the casing, in the following way.

First, the casing is opened as described above by separating the first leaf 10 and the second leaf 11 about the hinge 12. Next, two fingers, usually the thumb and the forefinger, are used to grip the periphery 46 of the disc 43 in the gap 27b and the finger portion 32. The effect of this is to move the mounting member 38 from the rest position shown in Figure 1 in a direction parallel to the plane of the disc 43 towards the axis of the depression 22. This moves the mounting member 38 and the disc 43 together until the periphery 46 of the disc engages the step 24 in the wall 23. This prevents further movement of the disc 43 but continued movement of the mounting of the release arm 29 forces the frusto-conical portion 40 to ride along the edge 48 of the aperture 47 so forcing the mounting member 38 downwardly and pivoting it about the hinge 36. This also has the effect of flexing the disc 43 downwardly in a direction normal to the plane of the disc 43, since the periphery 46 of the disc 43 is held by the step 24 and the projection 41 still overlies the second side 45 of the disc 43.

This movement changes the orientation of the mounting member 38 relative to the disc 43 and tilts the projection 41 from the position in which it overlies the second side 45 of the disc 43 to a position in which it lies within the aperture 47. This is shown in Figure 3.

When thus released from the mounting member 38, the disc 43 flexes upwardly to release from the mounting member 38. The digit contacting the flange 33 on the finger portion 32 can then be removed to grip the periphery 46 of the disc 43 and remove the disc. As seen in Figure 4, this releases the release mechanism 28 which, under the action of the links 30 moves back to the rest position ready to receive another disc.

The disc 43 can alternatively be released by manual downward pressure directly on the top of the mounting member 38. This pivots the mounting member 38 about the hinge and moves the arm 29 from the rest position to release the disc 43 as described above.

It will be appreciated that there are a number of changes that can be made to the holder described above. Clearly, the holder could have more than one mounting member; there could be two or three or more mounting members with the first and second leaves 10,11 being sized correspondingly. The holder need not carry a CD or a DVD; it could carry any form of disc with a central aperture.

In addition, the principle of releasing the disc from the mounting member at a position remotely from the mounting member may be implemented other than as described above. For example, the release mechanism 28 need not be operated from a position absolutely adjacent the periphery of the disc 43; it could be operated from a different position. The movement applied by a finger need not be transmitted to the mounting member by a release arm of the kind described above; it could be transmitted by any mechanism. Further, the mounting member 38 need not release and engage the disc 43 as described above; the mounting member 29 could, for example, be deformed inwardly to release from the disc 43 or could have a catch or latch that released an operation of the finger portion 32.

A further possibility is to provide a second arm 29 diametrically opposite the arm 29 described above with reference to the drawings. Each arm 29 carries part of the mounting member that extends through the aperture 47. Gripping both finger portions 32 and squeezing them together releases the disc 43 from the mounting member. Three or more such arms 29 could be provided.

## Claims

1. A holder for a disc (43) having a central aperture (47), the holder comprising a mounting member (38) which extends through the disc aperture to mount the disc (43) on the mounting member (38), and a release mechanism (28) acting on the mounting member (38) operable at at least one position remote from the mounting member (38) cause the mounting member (38) to release the disc (43) from the mounting member (38).

2. A holder according to claim 1 wherein the disc (43) has a periphery (46), the release mechanism (28) being operable from a position radially outwardly of the periphery (46) of the disc.

3. A holder according to claim 2 wherein the position is adjacent said disc periphery (46), the release mechanism (28) being operable on manual gripping of the disc (43) at the periphery (46) thereof and the release mechanism (28) at spaced points relative to the periphery (46) of the disc (43) and generally across a diameter of the disc (43).

4. A holder according to any one of claims 1 to 3 wherein the release mechanism (28) is carried by a support (11), operation of the release mechanism (28) moving the mechanism (28) relative to said support (11) to release the disc.

5. A holder according to claim 4 wherein the disc (43) has a first side (44) and a second side (45), said aperture (47) extending between the first side (44) and the second side (45), the first side (44) facing the support (11) with the mounting member (38) extending through the aperture (47) when the disc (43) is mounted on the mounting member (38), and the mounting member (38) being carried by the support (11).

6. A holder according to claim 5 wherein operation of the release mechanism (28) with a disc (43) on the mounting member (38) initially moves the disc (43) and the mounting member (38) together relative to the support until the disc (43) engages the support (11) when the disc (43) is held against further movement, the mounting member (38) subsequently being moved by the release mechanism (28) relative to the disc (43) to release the disc (43) from the mounting member (28).

7. A holder according to claim 6 wherein the support (11) includes a wall (23) which engages the periphery (46) of the disc (43) on operation of the release mechanism (28) to hold the disc (43) against further movement of the disc (43) in the plane thereof.

8. A holder according to claim 6 or claim 7 wherein the mounting member (38) carries a projection (41) which overlies the second surface (45) of the disc (43), when the disc (43) is mounted on the support (11), to hold the disc (43) on the mounting member (38), said subsequent movement of the mounting member (38) disengaging the projection (41) from the second surface (45) of the disc (43).

9. A holder according to claim 8 wherein the projection (41) is at an end of the mounting member (38) remote from the support (11) and is disposed about a radius to a central axis of the projection (41) generally normal to the plane of a disc (43) mounted on the mounting member (38).

10. A holder according to claim 8 or claim 9 wherein said subsequent movement of the mounting member (38) changes the orientation of the mounting member (38) relative to the disc (43) to permit the projection (41) to pass through the aperture (47).

11. A holder according to claim 10 wherein the mounting member (38) includes a guide surface (40), engagement of the guide surface (40) with the disc (43) during said subsequent movement of the mounting member (38) causing said change in orientation of the mounting member (38).

12. A holder according to claim 11 wherein the guide surface (40) is at least partially frusto-conical.

13. A holder according to claim 11 or claim 12 wherein operation of said release mechanism (28), after said initial movement, moves the mounting member (38) relative to the disc (43) to slide the edge of the disc aperture (47) back along the guide surface (40) to bring said remote end into the aperture (47) and so release the disc (43).

14. A holder according to any one of claims 8 to 13 wherein the disc (43) is resilient, said subsequent movement of the mounting member (38) by the release mechanism (28) flexing the disc in a direction normal to the plane of the disc (43), said flexing providing a resilient force tending to release the disc (43) from the mounting member (38).

15. A holder according to any one of claims 4 to 14 wherein the release mechanism (28) comprises a release arm (29) having a first end and a second end, a finger-engageable portion (32) being provided at said first end and the second end acting on the mounting member (38), the release arm (29) moving between a rest position and a release position.

16. A holder according to claim 15 wherein the arm (29) is spring biased towards the rest position.

17. A holder according to claim 16 wherein the release arm (29) is formed from a plastics material in one-piece with the support (11), flexible links (30) extending between the support (11) and the release arm (29) and being formed integrally therewith, said links providing said spring bias.

18. A holder according to any one of claims 15 to 17 when dependent on claim 10 or any claim appendant thereto wherein the mounting member (38) is carried at said second end of the release arm (29) to permit resilient movement of the mounting member (38) relative to a disc (43) carried by the mounting member (38) about an axis parallel to the plane of a disc (43) carried on the mounting member (38) to provide said change in the orientation of the mounting member (38).

19. A holder according to claim 18 wherein the arm (29) includes a resilient hinge (36) providing said resilient movement of the mounting member.

20. A holder according to any one of claims 15 to 18 wherein the support (11) comprises a generally flat portion with a raised zone extending around the mounting member and around a disc (43) mounted on the mounting member (38), the raised zone being interrupted at two diametrically opposed sections (25a,25b), the finger engageable portion (32) being located in one of said sections.

21. A holder according to claim 19 when dependent on claim 6 wherein the raised zone engages the disc (43).

22. A holder according to claim 19 or claim 20 when dependent on claim 14 wherein the disc (43) engages said raised zone to flex the disc.

23. A holder according to any one of claims 1 to 22 wherein the mounting member (38) is contactable directly to release a disc (43) from the mounting member.

24. A holder according to any one of claims 1 to 23 wherein a disc (43) is mountable on the mounting member (38) by pressing the disc (43) on to the mounting member (38).

25. A holder according to claim 24 when dependent on claim 10 wherein pressing a disc (43) on to the mounting member (38) changes the orientation of the mounting member (38) relative to the disc (43) to permit the projection (41) to pass through the aperture (47), the orientation of the mounting member (38) then reverting so that the disc (43) is mounted on the mounting member (38) with the projection (41) overlying the second surface (45) of the disc.

26. A holder according to any one of claims 1 to 25 in combination with a disc (43).

27. A holder and a disc combination according to claim 26 wherein the disc (43) is a CD or a DVD.

## Patentansprüche

1. Behälter für eine Platte (43) mit einer mittigen Öffnung (47), wobei der Behälter ein Anbringungselement (38), das sich durch die Plattenöffnung hindurch erstreckt, um die Platte (43) an dem Anbringungselement (38) anzubringen, und einen Lösemechanismus (28) umfasst, der auf das Anbringungselement (38) einwirkt und an wenigstens eine Position von dem Anbringungselement (38) entfernt gebracht werden kann, um das Anbringungselement (38) zu veranlassen, die Platte (43) von dem Anbringungselement (38) zu lösen.

2. Behälter nach Anspruch 1, wobei die Platte (43) einen Rand (46) hat und der Lösemechanismus (28) von einer Position radial außerhalb des Randes (46) der Platte betätigt werden kann.

3. Behälter nach Anspruch 2, wobei die Position an den Plattenrand (46) angrenzt und der Lösemechanismus (28) beim manuellen Ergreifen der Platte (43) am Rand (46) derselben und des Lösemechanismus (28) an beabstandeten Punkten relativ zu dem Rand (46) der Platte (43) und im Allgemeinen über einen Durchmesser der Platte (43) betätigt werden kann.

4. Behälter nach einem der Ansprüche 1 bis 3, wobei der Lösemechanismus (28) von einem Träger (11) getragen wird und durch Betätigung des Lösemechanismus (28) der Mechanismus (28) relativ zu dem Träger (11) bewegt wird, um die Platte zu lösen.

5. Behälter nach Anspruch 4, wobei die Platte (43) eine erste Seite (44) und eine zweite Seite (45) hat und sich die Öffnung (43) zwischen der ersten Seite (44) und der zweiten Seite (45) erstreckt, wobei die erste Seite (44) dem Träger (11) zugewandt ist und sich das Anbringungselement (38) durch die Öffnung (47) hindurch erstreckt, wenn die Platte (43) an dem Anbringungselement (38) angebracht ist, und das Anbringungselement (38) von dem Träger (11) getragen wird.

6. Behälter nach Anspruch 5, wobei durch Betätigung des Lösemechanismus (28), wenn sich eine Platte (43) auf dem Anbringungselement (38) befindet, zunächst die Platte (43) und das Anbringungselement (38) relativ zu dem Träger zusammen bewegt werden, bis die Platte (43) mit dem Träger (11) in Eingriff kommt, wenn die Platte (43) an weiterer Bewegung gehindert wird, und das Anbringungselement (38) anschließend durch den Lösemechanismus (28) relativ zu der Platte (43) bewegt wird, um die Platte (43) von dem Anbringungselement (28) zu lösen.

7. Behälter nach Anspruch 6, wobei der Träger (11) eine Wand (23) enthält, die bei Betätigung des Lösemechanismus (28) mit dem Rand (46) der Platte (43) in Eingriff kommt, um die Platte (43) an weiterer Bewegung der Platte (43) in der Ebene derselben zu hindern.

8. Behälter nach Anspruch 6 oder Anspruch 7, wobei das Anbringungselement (38) einen Vorsprung (41) trägt, der über der zweiten Fläche (45) der Platte (43) liegt, wenn die Platte (43) auf dem Träger (11) angebracht ist, um die Platte (43) auf dem Anbringungselement (38) zu halten, wobei durch anschließende Bewegung des Anbringungselementes (38) der Vorsprung (41) aus dem Eingriff mit der zweiten Fläche (45) der Platte (43) gelöst wird.

9. Behälter nach Anspruch 8, wobei sich der Vorsprung (41) an einem Ende des Anbringungselementes (38) von dem Träger (11) entfernt befindet und um einen Radius zu einer Mittelachse des Vorsprungs (41) herum im Allgemeinen senkrecht zu der Ebene einer Platte (43) angeordnet ist, die an dem Anbringungselement (38) angebracht ist.

10. Behälter nach Anspruch 8 oder 9, wobei durch die anschließende Bewegung des Anbringungselementes (38) die Ausrichtung des Anbringungselementes (38) relativ zu der Platte (43) verändert wird, um den Vorsprung (41) durch die Öffnung (47) hindurchtreten zu lassen.

11. Behälter nach Anspruch 10, wobei das Anbringungselement (38) eine Führungsfläche (40) enthält und Eingriff der Führungsfläche (40) mit der Platte (43) während der anschließenden Bewegung des Anbringungselementes (38) die Änderung der Ausrichtung des Anbringungselementes (38) bewirkt.

12. Behälter nach Anspruch 11, wobei die Führungsfläche (40) wenigstens teilweise kegelstumpfförmig ist.

13. Behälter nach Anspruch 11 oder Anspruch 12, wobei durch die Betätigung des Lösemechanismus (28) nach der anfänglichen Bewegung das Anbringungselement (38) relativ zu der Platte (43) bewegt wird, um die Kante der Plattenöffnung (47) an der Führungsfläche (40) zurückzuschieben und das entfernte Ende in die Öffnung (47) zu bringen und so die Platte (43) zu lösen.

14. Behälter nach einem der Ansprüche 8 bis 13, wobei die Platte (43) elastisch ist und durch die anschließende Bewegung des Anbringungselementes (38) durch den Lösemechanismus (28) die Platte in einer Richtung senkrecht zu der Ebene der Platte (43) gebogen wird, wobei durch das Biegen eine elastische Kraft erzeugt wird, die versucht, die Platte (43) von dem Anbringungselement (38) zu lösen.

15. Halter nach einem der Ansprüche 4 bis 14, wobei der Lösemechanismus (28) einen Lösearm (29) mit einem ersten Ende und einem zweiten Ende umfasst, wobei ein Teil (32), der mit Fingern in Eingriff gebracht werden kann, an dem ersten Ende und dem zweiten Ende vorhanden ist und auf das Anbringungselement (38) wirkt, und sich der Lösearm (29) zwischen einer Ruheposition und einer Löseposition bewegt.

16. Behälter nach Anspruch 15, wobei der Arm (29) federnd auf die Ruheposition zu gespannt wird.

17. Behälter nach Anspruch 16, wobei der Lösearm aus einem Kunststoffmaterial aus einem Stück mit dem Träger (11) ausgebildet ist und sich flexible Verbindungen (30) zwischen dem Träger (11) und dem Lösearm erstrecken und integral damit ausgebildet sind, wobei die Verbindungen die Federspannung erzeugen.

18. Behälter nach einem der Ansprüche 15 bis 17, wenn abhängig von Anspruch 10 oder einem damit verbundenen Anspruch, wobei das Anbringungselement (38) an dem zweiten Ende des Lösearms (29) getragen wird, um elastische Bewegung des Anbringungselementes (38) relativ zu einer Platte (43), die von dem Anbringungselement (38) getragen wird, um eine Achse parallel zu der Ebene einer Platte (43), die von dem Anbringungselement (38) getragen wird, zu ermöglichen und die Änderung der Ausrichtung des Anbringungselementes (38) zu erzeugen.

19. Behälter nach Anspruch 18, wobei der Arm (29) ein elastisches Gelenk (36) enthält, das die elastische Bewegung des Anbringungselementes erzeugt.

20. Behälter nach einem der Ansprüche 15 bis 18, wobei der Träger (11) einen im Allgemeinen flachen Abschnitt mit einer erhabenen Zone umfasst, die sich um das Anbringungselement und um eine Platte (43), die an dem Anbringungselement (38) angebracht ist, herum erstreckt, wobei die erhabene Zone an zwei einander diametral gegenüberliegenden Abschnitten (25a, 25b) unterbrochen ist und der Teil (32), der mit Fingern in Eingriff kommen kann, sich in einem der Abschnitte befindet.

21. Behälter nach Anspruch 19, wenn abhängig vom Anspruch 6, wobei die erhabene Zone mit der Platte (43) in Eingriff kommt.

22. Behälter nach Anspruch 19 oder Anspruch 20, wenn abhängig von Anspruch 14, wobei die Platte (43) mit der erhabenen Zone in Eingriff kommt, um die Platte zu biegen.

23. Behälter nach einem der Ansprüche 1 bis 22, wobei direkter Kontakt mit dem Anbringungselement (38) hergestellt werden kann, um eine Platte (43) von dem Anbringungselement zu lösen.

24. Behälter nach einem der Ansprüche 1 bis 23, wobei eine Platte (43) an dem Anbringungselement (38) angebracht werden kann, indem die Platte (43) auf das Anbringungselement (38) gedrückt wird.

25. Behälter nach Anspruch 24, wenn abhängig von Anspruch 10, wobei durch das Drücken einer Platte (43) auf das Anbringungselement (38) die Ausrichtung des Anbringungselementes (38) relativ zu der Platte (43) verhindert wird, um zu ermöglichen, dass der Vorsprung (41) durch die Öffnung (47) hindurchtritt, und sich die Ausrichtung des Anbringungselementes (38) dann umkehrt, so dass die Platte (43) so an dem Anbringungselement (38) angebracht wird, dass der Vorsprung (41) über der zweiten Fläche (45) der Platte liegt.

26. Behälter nach einem der Ansprüche 1 bis 5 in Kombination mit einer Platte (43).

27. Kombination aus einem Behälter und einer Platte nach Anspruch 26, wobei die Platte (43) eine CD oder eine DVD ist.

## Revendications

1. Support pour un disque (43) doté d'une ouverture centrale (47), le support comprenant un élément de montage (38) qui s'étend à travers l'ouverture de disque pour installer le disque (43) sur l'élément de montage (38), et un mécanisme de dégagement (28) agissant sur l'élément de montage (38) pouvant fonctionner au moins à une position à distance de l'élément de montage (38) qui amène l'élément de montage (38) à libérer le disque (43) de l'élément de montage (38).

2. Support selon la revendication 1, dans lequel le disque (43) a une périphérie (46), le mécanisme de dégagement (28) pouvant fonctionner à partir d'une position radialement à l'extérieur de la périphérie (46) du disque.

3. Support selon la revendication 2, dans lequel la position est adjacente à ladite périphérie (46) du disque, le mécanisme de dégagement (28) pouvant fonctionner suite à la prise manuelle du disque (43) au niveau de sa périphérie (46) et du mécanisme de dégagement (28) à des points espacés par rapport à la périphérie (46) du disque (43) et généralement sur un diamètre du disque (43).

4. Support selon l'une quelconque des revendications 1 à 3, dans lequel le mécanisme de dégagement (28) est supporté par un support (11), le fonctionnement du mécanisme de dégagement (28) déplaçant le mécanisme (28) par rapport audit support (11) pour libérer le disque.

5. Support selon la revendication 4, dans lequel le disque (43) a un premier côté (44) et un second côté (45), ladite ouverture (47) s'étendant entre le premier côté (44) et le second côté (45), le premier côté (44) faisant face au support (11) avec l'élément de montage (38) s'étendant à travers l'ouverture (47) lorsque le disque (43) est installé sur l'élément de montage (38), et l'élément de montage (38) étant supporté par le support (11).

6. Support selon la revendication 5, dans lequel le fonctionnement du mécanisme de dégagement (28) avec un disque (43) sur l'élément de montage (38) déplace initialement le disque (43) et l'élément de montage (38) ensemble par rapport au support jusqu'à ce que le disque (43) mette en prise le support (11) lorsque le disque (43) est maintenu contre le mouvement supplémentaire, l'élément de montage (38) étant successivement déplacé par le mécanisme de dégagement (28) par rapport au disque (43) pour libérer le disque (43) de l'élément de montage (28).

7. Support selon la revendication 6, dans lequel le support (11) comprend une paroi (23) qui met en prise la périphérie (46) du disque (43) suite au fonctionnement du mécanisme de dégagement (28) pour maintenir le disque (43) contre le mouvement supplémentaire du disque (43) dans son plan.

8. Support selon la revendication 6 ou la revendication 7, dans lequel l'élément de montage (38) supporte une saillie (41) qui recouvre la seconde surface (45) du disque (43), lorsque le disque (43) est installé sur le support (11) pour maintenir le disque (43) sur l'élément de montage (38), ledit mouvement successif de l'élément de montage (38) dégageant la saillie (41) de la seconde surface (45) du disque (43).

9. Support selon la revendication 8, dans lequel la saillie (41) se trouve au niveau d'une extrémité de l'élément de montage (38) à distance du support (11) et est disposée autour d'un rayon d'un axe central de la saillie (41) généralement normal par rapport au plan d'un disque (43) installé sur l'élément de montage (38).

10. Support selon la revendication 8 ou la revendication 9, dans lequel ledit mouvement successif de l'élément de montage (38) change l'orientation de l'élément de montage (38) par rapport au disque (43) pour permettre à la saillie (41) de passer à travers l'ouverture (47).

11. Support selon la revendication 10, dans lequel l'élément de montage (38) comprend une surface de guidage (40), la mise en prise de la surface de guidage (40) avec le disque (43) pendant ledit mouvement successif de l'élément de montage (38) provoquant ledit changement d'orientation de l'élément de montage (38).

12. Support selon la revendication 11, dans lequel la surface de guidage (40) est au moins partiellement tronconique.

13. Support selon la revendication 11 ou la revendication 12, dans lequel le fonctionnement dudit mécanisme de dégagement (28), après ledit mouvement initial, déplace l'élément de montage (38) par rapport au disque (43) pour faire coulisser le bord de l'ouverture (47) de disque en arrière le long de la surface de guidage (40) pour amener ladite extrémité à distance dans l'ouverture (47) et dégager ainsi le disque (43).

14. Support selon l'une quelconque des revendications 8 à 13, dans lequel le disque (43) est élastique, ledit mouvement successif de l'élément de montage (38) par le mécanisme de dégagement (28) faisant fléchir le disque dans une direction normale par rapport au plan du disque (43), ladite flexion proposant une force élastique ayant tendance à dégager le disque (43) de l'élément de montage (38).

15. Support selon l'une quelconque des revendications 4 à 14, dans lequel le mécanisme de dégagement (28) comprend un bras de dégagement (29) ayant une première extrémité et une seconde extrémité, une partie pouvant mettre un doigt en prise (32) étant prévue au niveau de ladite première extrémité et la seconde extrémité agissant sur l'élément de montage (38), le bras de dégagement (29) se déplaçant entre une position de repos et une position de dégagement.

16. Support selon la revendication 15, dans lequel le bras (29) est un ressort sollicité vers la position de repos.

17. Support selon la revendication 16, dans lequel le bras de dégagement (29) est formé à partir d'une matière plastique d'une seule pièce avec le support (11), des articulations flexibles (30) s'étendant entre le support (11) et le bras de dégagement (29) et étant formées de manière solidaire avec ceux-ci, lesdites articulations proposant la sollicitation dudit ressort.

18. Support selon l'une quelconque des revendications 15 à 17 lorsqu'elle est dépendante de la revendication 10 ou d'une revendication quelconque annexée à celle-ci, dans lequel l'élément de montage (38) est supporté au niveau de ladite seconde extrémité du bras de dégagement (29) pour permettre le mouvement élastique de l'élément de montage (38) par rapport à un disque (43) supporté par l'élément de montage (38) autour d'un axe parallèle au plan d'un disque (43) supporté sur l'élément de montage (38) pour proposer ledit changement de direction de l'élément de montage (38).

19. Support selon la revendication 18, dans lequel le bras (29) comprend une charnière élastique (36) proposant ledit mouvement élastique de l'élément de montage.

20. Support selon l'une quelconque des revendications 15 à 18, dans lequel le support (11) comprend une partie généralement plate avec une zone en relief s'étendant autour de l'élément de montage et autour d'un disque (43) installé sur l'élément de montage (38), la zone en relief étant interrompue au niveau de deux sections diamétralement opposées (25a, 25b), la partie pouvant mettre un doigt en prise (32) étant située dans l'une desdites sections.

21. Support selon la revendication 19 lorsqu'elle est dépendante de la revendication 6, dans lequel la zone en relief met en prise le disque (43).

22. Support selon la revendication 19 ou la revendication 20 lorsqu'elle est dépendante de la revendication 14, dans lequel le disque (43) met en prise ladite zone en relief pour faire fléchir le disque.

23. Support selon l'une quelconque des revendications 1 à 22, dans lequel l'élément de montage (38) peut être raccordé directement pour dégager un disque (43) de l'élément de montage.

24. Support selon l'une quelconque des revendications 1 à 23, dans lequel un disque (43) peut être installé sur l'élément de montage (38) en appuyant le disque (43) sur l'élément de montage (38).

25. Support selon la revendication 24 lorsqu'elle est dépendante de la revendication 10, dans lequel le fait d'appuyer un disque (43) sur l'élément de montage (38) change l'orientation de l'élément de montage (38) par rapport au disque (43) pour permettre à la saillie (41) de passer à travers l'ouverture (47), l'orientation de l'élément de montage (38) étant alors inversée de sorte que le disque (43) est monté sur l'élément de montage (38) avec la saillie (41) qui recouvre la seconde surface (45) du disque.

26. Support selon l'une quelconque des revendications 1 à 25 en combinaison avec un disque (43).

27. Support et une combinaison de disque selon la revendication 26, dans lequel le disque (43) est un CD ou un DVD.
